# EUROPÄISCHE PATENTSCHRIFT

(11) **EP 4 237 271 B1**
(45) Veröffentlichungstag und Bekanntmachung des Hinweises auf die Patenterteilung: **11.03.2026**
(21) Anmeldenummer: 21844265.5
(22) Anmeldetag: 21.12.2021
(51) Int. Cl.: B60L 9/04, H01R 13/703, H02J 1/00, B65G 23/00, B65G 43/00, H01R 13/62, H01R 13/621, H01R 13/629

(54) **ANSCHLUSSVERBINDER FÜR ANTRIEBSEINHEITEN**
CONNECTOR FOR DRIVE UNITS
CONNECTEUR DE RACCORDEMENT POUR UNITÉS D'ENTRAÎNEMENT

(30) Priorität: 22.12.2020 EP 20216437
(43) Veröffentlichungstag der Anmeldung: 06.09.2023
(73) Patentinhaber: Siemens Aktiengesellschaft, 80333 München (DE)
(72) Erfinder: KÜRTEN, Bernd, 90587 Obermichelbach (DE)
(74) Vertreter: Siemens Patent Attorneys
(86) Internationale Anmeldenummer: PCT/EP2021/087087
(87) Internationale Veröffentlichungsnummer: WO 2022/136430

(56) Entgegenhaltungen:
- EP-A1- 3 579 354
- EP-A1- 3 637 596
- WO-A2-2020/084111
- DE-A1- 102010 031 456
- DE-A1- 102017 218 136
- US-A1- 2004 058 586
- US-A1- 2020 287 323

## Beschreibung

Die Erfindung betrifft ein Antriebssystem mit einer Mehrzahl von Antriebseinheiten mit den Oberbegriffsmerkmalen des Anspruchs 1. Außerdem betrifft die Erfindung einen Anschlussverbinder für ein Antriebssystem und ein Verfahren zum Herstellen und Trennen einer Verbindung einer Antriebseinheit mit einem Energieversorgungssystem und einem Steuerungssystem.

Bei dezentralen Antriebssystemen mit einer Mehrzahl von Antriebseinheiten, beispielsweise bei Förderbändern, musste bislang bei einem Tausch einer einzelnen Antriebseinheit das gesamte Antriebssystem abgeschaltet werden. Dabei kommt es zu einem Stillstand der gesamten Anlage, was zu vermeiden ist. Ein bekanntes Antriebssystem ist beispielsweise in der US 2004/058586 A1, der EP 3 637 596 A1, der DE 10 2010 031456 A1, der DE 10 2017 218136 A1, oder der DE 197 16 908 A1 offenbart.

Der Erfindung liegt die Aufgabe zugrunde, ein Antriebssystem mit einer Mehrzahl von Antriebseinheiten anzugeben, bei welchem ein einfacher Austausch einzelner Antriebseinheiten möglich ist, ohne dass es hierfür zu einem Stillstand des gesamten Antriebssystems kommen muss.

Diese Aufgabe wird gelöst durch ein Antriebssystem mit einer Mehrzahl von Antriebseinheiten mit den Merkmalen des Anspruchs 1. Zudem wird die Aufgabe gelöst durch einen Anschlussverbinder gemäß Anspruch 9. Außerdem wird die Aufgabe gelöst durch ein Verfahren zum Herstellen und Trennen einer Verbindung einer Antriebseinheit gemäß Anspruch 12. Vorteilhafte Weiterbildungen ergeben sich aus den abhängigen Ansprüchen.

Ein erfindungsgemäßes Antriebssystem umfasst eine Mehrzahl von Antriebseinheiten, wobei die Antriebseinheiten jeweils wenigstens einen Umrichter und einen Motor umfassen. Das Antriebssystem weist zudem ein Energieversorgungssystem auf, welches dazu ausgebildet ist, die Antriebseinheiten mit einer elektrischen Energie zu versorgen, und ein Steuerungssystem, welches einen Steuerrechner und wenigstens eine Steuerleitung umfasst, wobei das Steuerungssystem dazu ausgebildet ist, Steueranweisungen an die Antriebseinheiten zu übertragen, auf.

Bei dem Antriebssystem sind das Energieversorgungssystem und die Antriebseinheiten jeweils über einen ersten Anschlussverbinder lösbar miteinander verbunden, vorzugsweise über eine Steckverbindung, und das Steuerungssystem und die Antriebseinheiten sind jeweils über einen zweiten Anschlussverbinder lösbar miteinander verbunden, vorzugsweise über eine Steckverbindung.

Mithilfe des Umrichters lässt sich beispielsweise ein mit dem Umrichter verbundener Motor steuern und/oder regeln. Dabei kann der Umrichter beispielsweise eine Spannungsamplitude oder eine Spannungsfrequenz vorgeben, mit welchen der Motor beaufschlagt wird. Bei dem Motor kann es sich beispielsweise um einen Elektromotor handeln.

Bei dem Energieversorgungssystem kann es sich um eine beliebige Spannungsquelle handeln (stationär oder netzgetrieben), die jeweils den Motor über den Umrichter einer Antriebseinheit mit elektrischer Energie versorgen kann, um einen bestimmungsgemäßen Gebrauch des Motors zu ermöglichen. Das elektrische Energieversorgungssystem ist dazu ausgebildet, eine Mehrzahl von Antriebseinheiten zu versorgen und ist dementsprechend in seiner Leistungsfähigkeit dimensioniert.

Der Steuerrechner kann jede beliebige Recheneinheit sein, die dazu ausgebildet ist, Steuerbefehle an den Umrichter und/oder den Motor einer jeweiligen Antriebseinheit zu generieren und diese über eine Steuerleitung, beispielsweise eine Kupferleitung oder eine Glasfaser, an die Antriebseinheiten zu übertragen.

Antriebseinheiten mit integrierten Umrichtern (und ggf. Motoren) bieten die Möglichkeit, die externen Anschlüsse auf ein Minimum zu reduzieren, da beispielsweise Temperaturfühler oder Positionsgeber intern realisiert werden können. Die Antriebseinheit weist lediglich eine Verbindung zu dem Energieversorgungssystem und zu dem Steuerungssystem auf. Bei der Verbindung zu dem Energieversorgungssystem kann es sich um eine Gleichspannungs- oder eine Wechselspannungsverbindung handeln (zweiphasig oder dreiphasig). Die Verbindung zu dem Steuerungssystem kann beispielsweise rein optisch sein, ohne dass eine elektrische Verbindung besteht.

Die Erfindung basiert auf der Idee, dass eine lösbare Verbindung zwischen den einzelnen Antriebseinheiten und der zentralen Energieversorgung sowie Steuerung einen Austausch einzelner (eventuell defekter oder zu überholender) Antriebseinheiten ermöglicht, ohne dass hierfür das Abschalten des gesamten Antriebssystems vonnöten wäre. Hierdurch können in dem Antriebssystem beispielsweise mehrere Antriebseinheiten hintereinandergeschaltet werden (was beispielsweise bei Förderbändern regelmäßig angewandt wird), ohne dass für den Austausch der Antriebseinheit eine Unterbrechung des Betriebes der übrigen Antriebseinheiten erfolgen muss. Der erste Anschlussverbinder und der zweite Anschlussverbinder verbleiben dabei im Antriebssystem und stellen den ordnungsgemäßen Betrieb sicher.

Bei der Antriebseinheit kann es sich auch um eine Kombination eines Umrichters mit einer Photovoltaikeinheit, beispielsweise einer Solarzelle, handeln. Die Vorteile des erfindungsgemäßen Antriebssystems kommen hier im Falle einer zu reparierenden oder auszutauschenden Photovoltaikeinheit (bzw. des Umrichters) zum Tragen, da die übrigen Antriebseinheiten (beispielsweise im Kontext einer photovoltaischen Anlage mit einer Vielzahl von Photovoltaikeinheiten (samt Umrichtern)) hierfür nicht abgeschaltet werden müssen.

Der erste Anschlussverbinder und der zweite Anschlussverbinder sind als ein gemeinsamer Anschlussverbinder ausgebildet, um die Handhabbarkeit zu verbessern.

Der gemeinsame Anschlussverbinder ist dabei derart ausgebildet, dass bei einem Lösen der Verbindung des gemeinsamen Anschlussverbinders mit der Antriebseinheit die Verbindung zwischen dem Steuerungssystem und der Antriebseinheit zeitlich vor der Verbindung zwischen den Energieversorgungssystem und der Antriebseinheit getrennt wird. Durch die vorherige Trennung der Verbindung der Antriebseinheit zu dem Steuerungssystem kann der Motor bzw. der Umrichter auf den bevorstehenden Spannungsabfall vorbereitet werden, der mit der darauffolgenden Trennung der Verbindung der Antriebseinheit zu dem Energieversorgungssystem einhergeht. Dies kann prinzipiell im Fall von getrennten Anschlussverbindern (erster und zweiter Anschlussverbinder) auch manuell von einem Wartungstechniker vorgenommen werden. Die entsprechende Ausgestaltung des (gemeinsamen) Anschlussverbinders bringt jedoch darüber hinaus den Vorteil mit sich, dass die Reihenfolge des Trennens der Verbindung automatisch in elektrisch vorteilhafterweise Reihenfolge vorgenommen wird (ohne Lichtbögen oder dgl. zu verursachen).

Im Rahmen einer bevorzugten Weiterbildung der Erfindung weisen der erste Anschlussverbinder, der zweite Anschlussverbinder oder der gemeinsame Anschlussverbinder und die Antriebseinheit jeweils einen komplementären Anschluss für eine Energieversorgung der Antriebseinheit über ein Gleichspannungsnetz und zusätzlich jeweils einen komplementären Anschluss für eine Vorladung des Umrichters der Antriebseinheit auf. Eine Vorladung des Umrichters kann in an sich bekannter Weise zu einer Reduktion von Stromspitzen beim Herstellen der Verbindung des Umrichters mit dem Energieversorgungssystem führen und damit einer Zerstörung oder einer übermäßigen Degeneration von Teilen des Umrichters vorbeugen.

Besonders bevorzugt weisen der erste Anschlussverbinder und/oder der zweite Anschlussverbinder oder der gemeinsame Anschlussverbinder eine lösbare Verbindung zu dem Energieversorgungsystem und/oder zu dem Steuerungssystem auf. Hierdurch lässt sich eine Antriebseinheit mitsamt dem dazugehörigen Anschlussverbinder auf einfache Art und Weise aus einem bestehenden Antriebssystem entfernen bzw. zu einem bestehenden Antriebssystem hinzufügen. Bei den zuvor beschriebenen lösbaren Verbindungen handelt es sich vorzugsweise um Steckverbindungen, also einer Verbindung, die ein Stecker und eine dazugehörige, korrespondierende Ausnehmung umfasst.

Das Antriebssystem kann derart ausgebildet sein, dass mehrere Handlungsschritte in einer vorherbestimmten Reihenfolge vorgenommen werden müssen, um die lösbare Verbindung oder die lösbaren Verbindungen lösen zu können. Dies bringt den Vorteil mit sich, dass einem versehentlichen Lösen der Verbindung(en) vorgebeugt werden kann.

Dabei können der Umrichter und/oder der erste Anschlussverbinder und/oder der zweite Anschlussverbinder und/oder der gemeinsame Anschlussverbinder auf Hebeln basierende Verriegelungen und/oder voreilende Kontakte und/oder magnetische Verriegelungen aufweisen, derart, dass die mehreren Handlungsschritte in der vorherbestimmten Reihenfolge vorgenommen werden müssen, um die lösbare Verbindung oder die lösbaren Verbindungen lösen zu können. Hierdurch lässt sich die erforderliche Reihenfolge der durchzuführenden Schritte besonders einfach und effizient vorgeben.

Bei einer vorteilhaften Weiterbildung der Erfindung weisen die Antriebseinheit und/oder der erste Anschlussverbinder und/oder der zweite Anschlussverbinder und/oder der gemeinsame Anschlussverbinder ein optisches Element auf, insbesondere eine Leuchtdiode, durch die ein Abschluss eines Vorladevorgangs des Umrichters oder eine Erreichung eines definierten Zustandes der Antriebseinheit signalisierbar ist. Ein Monteur des Antriebssystems erhält hierdurch eine Information darüber, ob beispielsweise der Umrichter zum Anschluss der Haupt(energie)versorgung im Anschluss an den Vorladevorgang bereit ist. Oder er erhält eine Aussage darüber, ob die Verbindung der Antriebseinheit zu dem Energieversorgungssystem getrennt werden kann.

Der erste Anschlussverbinder und/oder der zweite Anschlussverbinder oder der gemeinsame Anschlussverbinder können ein Filterelement, insbesondere ein Kondensator, und/oder eine Schirmung aufweisen, um eine elektromagnetische Verträglichkeit des Anschlussverbinders zu erhöhen. Ebenfalls möglich sind derartige Maßnahmen beim Umrichter und/oder dem Motor. Zusätzlich können Maßnahmen an den Verbindungen des Anschlussverbinders (erster, zweiter und/oder gemeinsamer) vorgesehen sein, die die elektrischen Kontakte des Anschlussverbinders vor einem Lichtbogen schützen können (z.B. in Form eines Dauermagneten (Blasung) oder durch eine entsprechende Beschaltung der Kontakte).

Die Aufgabe wird zudem gelöst durch einen Anschlussverbinder für ein Antriebssystem, bei dem der Anschlussverbinder derart ausgebildet ist, dass bei einem Lösen der Verbindung des gemeinsamen Anschlussverbinders mit der Antriebseinheit die Verbindung zwischen dem Steuerungssystem und der Antriebseinheit zeitlich vor der Verbindung zwischen den Energieversorgungssystem und der Antriebseinheit getrennt wird.

Der Anschlussverbinder kann nicht nur für ein Antriebssystem verwendet werden. Er lässt sich auch für eine Kombination eines Umrichters mit einer stromerzeugenden Einheit, beispielsweise einer Photovoltaikeinheit, verwenden. Vorteilhafterweise weist der Anschlussverbinder dabei eine Verbindung zu dem Energieversorgungssystem und/oder zu dem Steuerungssystem auf.

Besonders bevorzugt weist der Anschlussverbinder einen zu der Antriebseinheit komplementären Anschluss für eine Energieversorgung der Antriebseinheit über ein Gleichspannungsnetz und zusätzlich einen komplementären Anschluss für eine Vorladung des Umrichters der Antriebseinheit auf.

Die Aufgabe wird außerdem gelöst durch ein Verfahren zum Herstellen und Trennen einer Verbindung einer Antriebseinheit, die einen Umrichter (und vorzugsweise einen Motor) umfasst, mit einem Energieversorgungssystem, welches dazu ausgebildet ist, die Antriebseinheit mit einer elektrischen Energie zu versorgen, und mit einem Steuerungssystem, welches einen Steuerrechner und wenigstens eine Steuerleitung umfasst, wobei das Steuerungssystem dazu ausgebildet ist, Steueranweisungen an die Antriebseinheit zu übertragen. Das Verfahren umfasst die folgenden Schritte:
a) Herstellen einer Verbindung der Antriebseinheit mit dem Energieversorgungssystem und dem Steuerungssystem durch einen gemeinsamen Anschlussverbinder;
b) Signalisieren der Antriebseinheit, dass eine Trennung zum dem Energieversorgungssystem bevorsteht, wobei das Signalisieren vorzugsweise durch ein Trennen der Verbindung der Antriebseinheit mit dem Steuerungssystem erfolgt;
c) Im Anschluss Trennen der Verbindung der Antriebseinheit mit dem Energieversorgungssystem durch ein Trennen der Verbindung der Antriebseinheit mit dem Anschlussverbinder.

Dabei wird beim Verfahrensschritt a bevorzugt zunächst eine Verbindung des Energieversorgungssystems zu einem Vorladeanschluss der Antriebseinheit über den Anschlussverbinder hergestellt, um wie zuvor bereits beschrieben, übermäßig hohe Stromspitzen und eine damit verbundene Abnutzung/Zerstörung der Antriebseinheit zu verhindern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit der Zeichnung näher erläutert werden. Es zeigen:
- FIG 1: ein erfindungsgemäßes Antriebssystem mit einer Antriebseinheit und einem Anschlussverbinder in einer schematischen Darstellung;
- FIG 2: eine erste Ausführungsform eines erfindungsgemäßen Anschlussverbinders in einer schematischen Darstellung;
- FIG 3: eine zweite Ausführungsform eines erfindungsgemäßen Anschlussverbinders in einer schematischen Zeichnung; und
- FIG 4: eine dritte Ausführungsform eines erfindungsgemäßen Anschlussverbinders in einer schematischen Zeichnung.

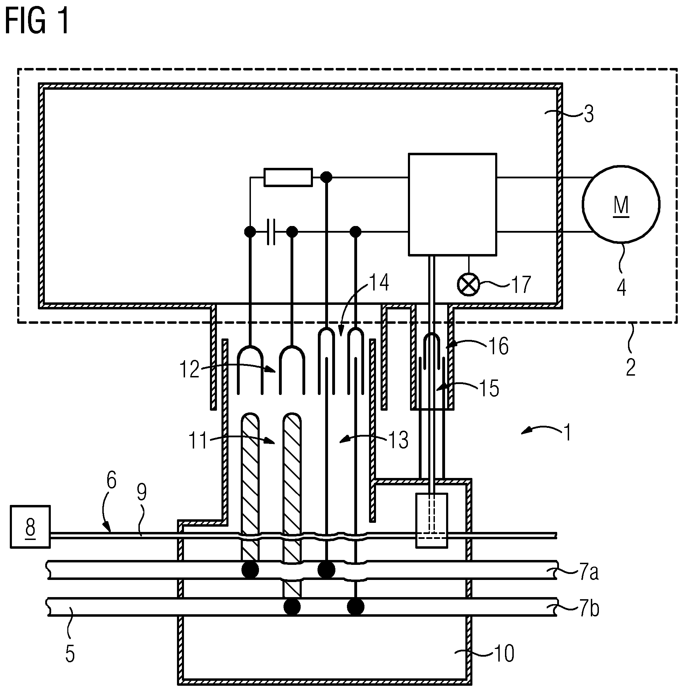

In FIG 1 ist ein Antriebssystem 1 dargestellt, welches eine Mehrzahl von Antriebseinheiten aufweist, von denen aus Gründen der Übersichtlichkeit nur eine einzige Antriebseinheit 2 dargestellt ist. Wenigstens eine weitere (nicht dargestellte) Antriebseinheit des Antriebssystems 1 ist im Wesentlichen identisch wie die in FIG 1 dargestellte Antriebseinheit 2 ausgebildet. Die Antriebseinheit 2 weist einen Umrichter 3 und einen Motor 4 auf.

Das Antriebssystem 1 umfasst darüber hinaus ein Energieversorgungssystem 5 und ein Steuerungssystem 6. Das Energieversorgungssystem 5 ist dazu ausgebildet, die Antriebseinheit 2 über Energieleitungen 7a, 7b (hier über ein Gleichspannungsnetz) mit elektrischer Energie zu versorgen. Das Steuerungssystem 6 weist einen Steuerrechner 8 und eine Steuerleitung 9 auf.

Das Energieversorgungssystem 5 und die Antriebseinheit 2 sind über einen Anschlussverbinder 10 lösbar miteinander verbunden. Hierzu weist der Anschlussverbinder 10 einen ersten Anschluss 11 und einen zweiten Anschluss 13 auf, die jeweils in Form eines Steckers oder Pins ausgebildet sind.

Der erste Anschluss 11 des Anschlussverbinders 10 ist derart ausgebildet, dass er in einen ersten Anschluss 12 der Antriebseinheit 2, der in Form einer Buchse ausgebildet ist, steckbar ist. Über den ersten Anschluss 11, 12 kann eine elektrische Energie zum Antrieb des Motors 4 (Hauptenergieversorgung) von dem Energieversorgungsystem 5 zu der Antriebseinheit 2 übertragen werden.

Der zweite Anschluss 13 des Anschlussverbinders 10 ist derart ausgebildet, dass er in einen zweiten Anschluss 14 der Antriebseinheit 2, der in Form einer Buchse ausgebildet ist, steckbar ist. Über den zweiten Anschluss 13, 14 kann eine elektrische Energie zum Vorladen des Umrichters 3 der Antriebseinheit 2 (Vorladeenergieversorgung) von dem Energieversorgungsystem 5 zu der Antriebseinheit 2 übertragen werden. Typischerweise sind die Anschlüsse 13, 14 für die Vorladung kleiner dimensioniert also die Anschlüsse 11, 12 für die Hauptenergieversorgung.

Der Anschlussverbinder 10 weist zudem einen dritten Anschluss 15 auf, welcher in Form eines Steckers oder Pins ausgebildet ist und in einen korrespondierenden Anschluss 16 der Antriebseinheit 2 in Form einer Buchse steckbar ist. Über diesen Anschluss 15, 16 ist das Steuerungssystem 6 mit der Antriebseinheit 2 lösbar verbindbar. Die Verbindung erfolgt im vorliegenden Beispiel über eine Glasfaser als Steuerleitung 9.

Ein Verfahren zum Herstellen und Trennen einer Verbindung der Antriebseinheit 2 mit dem Energieversorgungssystem 5 und mit dem Steuerungssystem 6 kann wie folgt durchgeführt werden. Der Anschlussverbinder 10, welcher eine Verbindung zu dem Energieversorgungssystem 5 und dem Steuerungssystem 6 aufweist, wird mit der Antriebseinheit 2 verbunden. Hierzu sind die Stecker des zweiten Anschlusses 13 länger ausgebildet als die Stecker des ersten Anschlusses 11, was in FIG 1 zu erkennen ist. Bei einem Einstecken des Anschlussverbinders 10 in die Antriebseinheit 2 (bzw. genauer: der Stecker der Anschlüsse 11, 13, 15 in die korrespondierenden Anschlüsse 12, 14, 16 der Antriebseinheit 2) wird durch diese Ausgestaltung der Stecker 13 die Verbindung zur Vorladung der Antriebseinheit 2 früher hergestellt als die Verbindung zur Hauptenergieversorgung des Motors 4 (man spricht hier auch von sogenannten "vorauseilenden Kontakten"). Dadurch wird automatisch, ohne dass ein Monteur hierfür besondere Sorgfalt üben müsste, ein Vorladen des Umrichters 3 ermöglicht, womit die zuvor bereits beschriebenen Vorteile hinsichtlich Haltbarkeit und Abnutzung der Antriebseinheit 2 verbunden sind. Über eine Leuchtdiode 17 als optisches Element (bzw. optisch wirkendes Element) kann die Antriebseinheit 3 signalisieren, dass der Vorladevorgang abgeschlossen ist.

In einem darauffolgenden Schritt wird der Antriebseinheit 2 signalisiert, dass die Verbindung wieder getrennt werden soll (beispielsweise im Fall eines geplanten Austauschs der Antriebseinheit 2). Hierzu kann der Steuerrechner 8 ein Signal an die Antriebseinheit 2 übertragen, das einen Übergang des Motors 4 bzw. Umrichters 3 in einen sicheren Zustand bewirkt. Es kann alternativ aber auch die Verbindung der Antriebseinheit 2 zu dem Steuerungssystem 6 getrennt werden, beispielsweise durch eine entsprechende Ausgestaltung der Anschlüsse 15, 16 des Anschlussverbinders 10 bzw. der Antriebseinheit 2. Diese können so ausgebildet sein, dass bei einem Abziehen/Lösen des Anschlussverbinders 10 von der Antriebseinheit 2 die Steuerverbindung zuerst getrennt wird (insbesondere vor den Anschlüssen 11, 12 der Hauptenergieversorgung). Mit anderen Worten ist der Anschlussverbinder 2 dabei derart ausgebildet ist, dass bei dem Lösen der Verbindung des Anschlussverbinders 10 mit der Antriebseinheit 2 die Verbindung zwischen dem Steuerungssystem 6 und der Antriebseinheit 2 zeitlich vor der Verbindung zwischen dem Energieversorgungssystem 5 und der Antriebseinheit 2 getrennt wird.

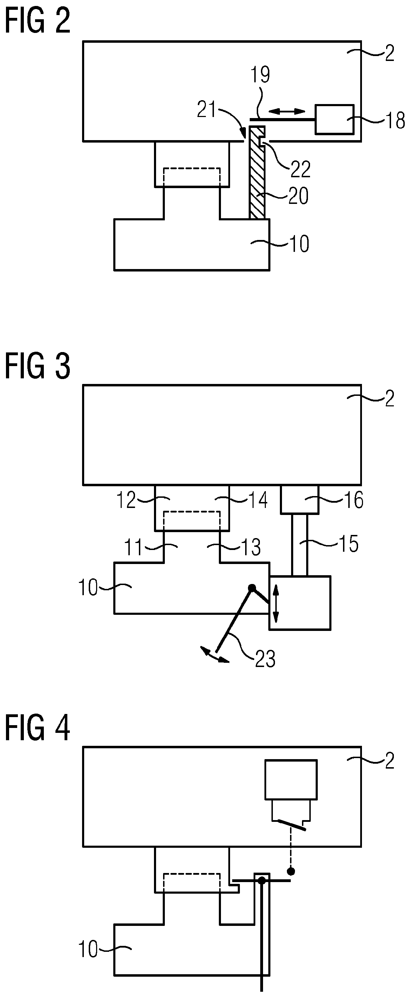

Im Anschluss wird die Verbindung der Antriebseinheit 2 mit dem Energieversorgungssystem 5 durch ein Trennen der Verbindung der Antriebseinheit 2 mit dem Anschlussverbinder 10 unterbrochen (durch Herausziehen des Anschlussverbinders 10 aus der Antriebseinheit 2). Es sind auch alternative Wege möglich, die Antriebseinheit 2 vorzubereiten, von denen einer anhand FIG 3 erläutert wird.

In FIG 2 ist ein Anschlussverbinder 10 und eine dazugehörige Antriebseinheit 2 dargestellt. Die Zeichnung ist gegenüber FIG 1 vereinfacht und stellt nur den Aspekt dar, dass bestimmte Handlungsschritte in einer vorherbestimmten Reihenfolge durchgeführt werden müssen, um die Verbindung zwischen Anschlussverbinder 10 und Antriebseinheit 2 lösen zu können. Die Antriebseinheit 2 weist hierzu eine (elektro-)magnetische Verriegelung 18 auf, die einen Stift 19 entlang einer Achse bewegen kann. Der Anschlussverbinder 10 weist einen Bolzen 20 auf, welcher beim Verbinden des Anschlussverbinders 10 mit der Antriebseinheit 2 in eine Ausnehmung 21 der Antriebseinheit 2 eingeführt wird. In dem Bolzen 20 befindet sich eine Aussparung 22, in welche der Stift 19 beim Verbinden von Anschlussverbinder 10 und Antriebseinheit 2 durch die Verriegelung 18 eingeführt werden kann. Der Bolzen 20 kann sich dadurch (in der Zeichenebene) nicht mehr nach unten bewegen, so dass Anschlussverbinder 10 und Antriebseinheit 2 aneinander gesichert sind. Ist ein Lösen der Verbindung beabsichtigt, erhält die Verriegelung 18 einen entsprechenden Steuerbefehl (über das Steuerungssystem 6 oder durch eine manuelle Handlung an der Antriebseinheit 2) und bewegt den Stift 19 aus der Aussparung 22 heraus, so dass der Anschlussverbinder 10 im Anschluss abgezogen werden kann. Dadurch erhält die Antriebseinheit 2 genügend Zeit, um sich auf die Trennung von dem Energieversorgungssystem 5 vorzubereiten.

In FIG 3 ist eine alternative Ausgestaltungsform eines Anschlussverbinders 10 dargestellt. Hierbei ist der Anschluss 15 für die Verbindung des Steuerungssystems 6 mit der Antriebseinheit 2 so ausgebildet, dass er gegen die Anschlüsse 11, 13 für die Energieversorgung verschoben werden kann. Hierzu kann eine auf einem Hebel 23 basierende Verriegelung verwendet werden. Durch diese Ausgestaltung des Anschlussverbinders 10 kann sichergestellt werden, dass zunächst die Verbindung der Antriebseinheit 2 zu dem Steuerungssystem 6 unterbrochen wird, um der Antriebseinheit 2 eine bevorstehende Trennung der Verbindung zu dem Energieversorgungssystem 5 zu signalisieren.

In FIG 4 weist die Antriebseinheit 2 eine interne Steuerung 24 auf, die entweder direkt (über einen Taster oder dergleichen) oder über das Steuerungssystem 6 ansprechbar ist. Die Steuerung 24 kann eine magnetisch wirkende Vorrichtung 25 triggern, welche über eine magnetische Anziehungskraft einen Verriegelungshebel 26 des Anschlussverbinders 10 zwischen einer Sperrstellung und einer Losstellung bewegen kann. Hierdurch kann sichergestellt werden, dass die Verbindung der Antriebseinheit 2 zu dem Anschlussverbinder 10 nicht ungewollt gelöst werden kann.

## Patentansprüche

1. Antriebssystem (1) mit einer Mehrzahl von Antriebseinheiten (2), wobei die Antriebseinheiten (2) jeweils einen Umrichter (3) und einen Motor (4) umfassen, und mit einem Energieversorgungssystem (5), welches dazu ausgebildet ist, die Antriebseinheiten (2) mit einer elektrischen Energie zu versorgen, und mit einem Steuerungssystem (6), welches einen Steuerrechner (8) und wenigstens eine Steuerleitung (9) umfasst, wobei das Steuerungssystem (8) dazu ausgebildet ist, Steueranweisungen an die Antriebseinheiten (2) zu übertragen, wobei das Energieversorgungssystem (5) und die Antriebseinheiten (2) jeweils über einen ersten Anschlussverbinder lösbar miteinander verbunden sind, vorzugsweise über eine Steckverbindung, und das Steuerungssystem (6) und die Antriebseinheiten (2) jeweils über einen zweiten Anschlussverbinder lösbar miteinander verbunden sind, vorzugsweise über eine Steckverbindung,
**dadurch gekennzeichnet, dass**
der erste Anschlussverbinder und der zweite Anschlussverbinder jeweils als ein gemeinsamer Anschlussverbinder (10) ausgebildet sind, wobei der gemeinsame Anschlussverbinder (10) derart ausgebildet ist, dass bei einem Lösen der Verbindung des gemeinsamen Anschlussverbinders (10) mit der Antriebseinheit (2) die Verbindung zwischen dem Steuerungssystem (6) und der Antriebseinheit (2) zeitlich vor der Verbindung zwischen dem Energieversorgungssystem (5) und der Antriebseinheit (2) getrennt wird.

2. Antriebssystem (1) nach Anspruch 1, bei dem der erste Anschlussverbinder, der zweite Anschlussverbinder oder der gemeinsame Anschlussverbinder (10) und die Antriebseinheit (2) jeweils einen komplementären Anschluss (11, 12) für eine Energieversorgung der Antriebseinheit über ein Gleichspannungsnetz und zusätzlich jeweils einen komplementären Anschluss (13, 14) für eine Vorladung des Umrichters (3) der Antriebseinheit (2) aufweisen.

3. Antriebssystem (1) nach einem der vorangegangenen Ansprüche, bei dem der erste Anschlussverbinder und/oder der zweite Anschlussverbinder oder der gemeinsame Anschlussverbinder (10) eine lösbare Verbindung zu dem Energieversorgungsystem (5) und/oder zu dem Steuerungssystem (6) aufweisen.

4. Antriebssystem (1) nach einem der vorangegangenen Ansprüche, bei dem die lösbare Verbindung eine Steckverbindung ist.

5. Antriebssystem (1) nach einem der vorangegangenen Ansprüche, bei dem mehrere Handlungsschritte in einer vorherbestimmten Reihenfolge vorgenommen werden müssen, um die lösbare Verbindung oder die lösbaren Verbindungen lösen zu können.

6. Antriebssystem (1) nach Anspruch 5, bei dem der Umrichter (3) und/oder der erste Anschlussverbinder und/oder der zweite Anschlussverbinder und/oder der gemeinsame Anschlussverbinder (10) auf Hebeln basierende Verriegelungen und/oder voreilende Kontakte und/oder magnetische Verriegelungen aufweisen, derart, dass die mehreren Handlungsschritte in der vorherbestimmten Reihenfolge vorgenommen werden müssen, um die lösbare Verbindung oder die lösbaren Verbindungen lösen zu können.

7. Antriebssystem (1) nach einem der vorangegangenen Ansprüche, bei dem die Antriebseinheit (2) und/oder der erste Anschlussverbinder und/oder der zweite Anschlussverbinder und/oder der gemeinsame Anschlussverbinder (10) ein optisches Element (17) aufweisen, insbesondere eine Leuchtdiode, durch die ein Abschluss eines Vorladevorgangs des Umrichters (3) oder eine Erreichung eines definierten Zustandes der Antriebseinheit (2) signalisierbar ist.

8. Antriebssystem (1) nach einem der vorangegangenen Ansprüche, bei dem der erste Anschlussverbinder und/oder der zweite Anschlussverbinder oder der gemeinsame Anschlussverbinder (10) ein Filterelement, insbesondere einen Kondensator, und/oder eine Schirmung aufweisen, um eine elektromagnetische Verträglichkeit zu erhöhen.

9. Anschlussverbinder (10) für ein Antriebssystem nach einem der vorangegangenen Ansprüche, bei dem der Anschlussverbinder (10) derart ausgebildet ist, dass bei einem Lösen der Verbindung des gemeinsamen Anschlussverbinders (10) mit der Antriebseinheit (2) die Verbindung zwischen dem Steuerungssystem (6) und der Antriebseinheit (2) zeitlich vor der Verbindung zwischen dem Energieversorgungssystem (5) und der Antriebseinheit (2) getrennt wird.

10. Anschlussverbinder (10) nach Anspruch 9, der eine lösbare Verbindung zu dem Energieversorgungsystem (5) und/oder zu dem Steuerungssystem (6) aufweist.

11. Anschlussverbinder (10) nach einem der Ansprüche 9 oder 10, der einen zu der Antriebseinheit (2) komplementären Anschluss (11) für eine Energieversorgung der Antriebseinheit (2) über ein Gleichspannungsnetz und zusätzlich einen komplementären Anschluss (14) für eine Vorladung des Umrichters (3) der Antriebseinheit (2) aufweist.

12. Verfahren zum Herstellen und Trennen einer Verbindung einer Antriebseinheit (2), die einen Umrichter (3), und vorzugsweise einen Motor (4), umfasst, mit einem Energieversorgungssystem (5), welches dazu ausgebildet ist, die Antriebseinheit (2) mit einer elektrischen Energie zu versorgen, und mit einem Steuerungssystem (6), welches einen Steuerrechner (8) und wenigstens eine Steuerleitung (9) umfasst, wobei das Steuerungssystem (6) dazu ausgebildet ist, Steueranweisungen an die Antriebseinheit (2) zu übertragen, das Verfahren umfassend:
a) Herstellen einer Verbindung der Antriebseinheit (2) mit dem Energieversorgungssystem (5) und dem Steuerungssystem (6) durch einen gemeinsamen Anschlussverbinder (10);
b) Signalisieren der Antriebseinheit (2), dass eine Trennung zum dem Energieversorgungssystem (5) bevorsteht, wobei das Signalisieren vorzugsweise durch ein Trennen der Verbindung der Antriebseinheit (2) mit dem Steuerungssystem (6) erfolgt;
c) Im Anschluss Trennen der Verbindung der Antriebseinheit (2) mit dem Energieversorgungssystem (5) durch ein Trennen der Verbindung der Antriebseinheit (2) mit dem Anschlussverbinder (10).

13. Verfahren nach Anspruch 12, bei dem beim Verfahrensschritt a gemäß Anspruch 12 zunächst eine Verbindung des Energieversorgungssystems (5) zu einem Vorladeanschluss (14) der Antriebseinheit (2) über den Anschlussverbinder (10) hergestellt wird.

## Claims

1. Drive system (1) having a plurality of drive units (2), wherein the drive units (2) in each case comprise an inverter (3) and a motor (4), and having an energy supply system (5) that is designed so as to supply the drive units (2) with an electrical energy, and having a control system (6) that comprises a control computer (8) and at least one control line (9), wherein the control system (8) is designed so as to transmit control instructions to the drive units (2),
wherein the energy supply system (5) and the drive units (2) are connected to one another in a detachable manner in each case via a first connection connector, preferably via a plug connection, and that the control system (6) and the drive units (2) are connected to one another in a detachable manner in each case via a second connection connector, preferably via a plug connection,
**characterised in that**
the first connection connector and the second connection connector are designed in each case as a common connection connector (10), wherein the common connection connector (10) is designed in such a manner that in the event of a detachment of the connection of the common connection connector (10) to the drive unit (2), the connection between the control system (6) and the drive unit (2) is separated chronologically prior to the connection between the energy supply system (5) and the drive unit (2).

2. Drive system (1) according to claim 1, in which the first connection connector, the second connection connector or the common connection connector (10) and the drive unit (2) respectively have a complementary connection (11, 12) for an energy supply of the drive unit via a DC voltage power supply and in addition respectively a complementary connection (13, 14) for pre-charging the inverter (3) of the drive unit (2).

3. Drive system (1) according to one of the preceding claims, in which the first connection connector and/or the second connection connector or the common connection connector (10) have a detachable connection to the energy supply system (5) and/or to the control system (6).

4. Drive system (1) according to one of the preceding claims, in which the detachable connection is a plug connection.

5. Drive system (1) according to one of the preceding claims, in which multiple operating steps must be performed in a predetermined sequence in order to be able to detach the detachable connection or the detachable connections.

6. Drive system (1) according to claim 5, in which the inverter (3) and/or the first connection connector and/or the second connection connector and/or the common connection connector (10) can have locking arrangements based on levers and/or leading contacts and/or magnetic locking arrangements in such a manner that the multiple operating steps must be performed in the predetermined sequence in order to be able to detach the detachable connection or the detachable connections.

7. Drive system (1) according to one of the preceding claims in which the drive unit (2) and/or the first connection connector and/or the second connection connector and/or the common connection connector (10) have an optical element (17), in particular a light-emitting diode, and it can be signalled by the light-emitting diode that a pre-charging procedure of the inverter (3) has been terminated or a defined state of the drive unit (2) has been reached.

8. Drive system (1) according to one of the preceding claims, in which the first connection connector and/or the second connection connector or the common connection connector (10) have a filter element, in particular a capacitor, and/or a shielding in order to increase an electromagnetic compatibility.

9. Connection connector (10) for a drive system according to one of the preceding claims, in which the connection connector (10) is designed in such a manner that in the event of a detachment of the connection of the common connection connector (10) to the drive unit (2), the connection between the control system (6) and the drive unit (2) is separated chronologically prior to the connection between the energy supply system (5) and the drive unit (2).

10. Connection connector (10) according to claim 9, which has a detachable connection to the energy supply system (5) and/or to the control system (6).

11. Connection connector (10) according to one of claims 9 or 10, which has a connection (11), which is complementary to the drive unit (2), for an energy supply of the drive unit (2) via a DC voltage power supply and in addition has a complementary connection (14) for pre-charging the inverter (3) of the drive unit (2).

12. Method for producing and separating a connection of a drive unit (2), which comprises an inverter (3), and preferably a motor (4), to an energy supply system (5) that is designed so as to supply the drive unit (2) with an electrical energy and to a control system (6) that comprises a control computer (8) and at least one control line (9), wherein the control system (6) is designed so as to transmit control instructions to the drive unit (2), the method comprising:
a) producing a connection of the drive unit (2) to the energy supply system (5) and to the control system (6) by a common connection connector (10);
b) signalling to the drive unit (2) that a separation from the energy supply system (5) is impending, wherein the signalling is preferably performed by a separation of the connection of the drive unit (2) to the control system (6);
c) subsequently separating the connection of the drive unit (2) to the energy supply system (5) by separating the connection of the drive unit (2) to the connection connector (10).

13. Method according to claim 12, in which during method step a in accordance with claim 12 initially a connection of the energy supply system (5) to a pre-charging connection (14) of the drive unit (2) is produced via the connection connector (10) .

## Revendications

1. Système (1) d'entraînement comprenant une pluralité d'unités (2) d'entraînement, dans lequel les unités (2) d'entraînement comprennent chacune un onduleur (3) et un moteur (4), et comprenant un système (5) d'alimentation en électricité, qui est constitué pour alimenter les unités (2) d'entraînement en énergie électrique, et comprenant un système (6) de commande, qui comprend un ordinateur (8) de commande et au moins une ligne (9) de commande, dans lequel le système (8) de commande est constitué pour transmettre des instructions de commande aux unités (2) d'entraînement, dans lequel le système (5) d'alimentation en électricité et les unités (2) d'entraînement sont reliées entre elles respectivement, avec possibilité de ne plus l'être, respectivement par un premier connecteur de raccordement, de préférence par une liaison par enfichage, et le système (6) de commande et les unités (2) d'entraînement sont reliées entre elles respectivement, de manière à pouvoir ne plus l'être, respectivement par un deuxième connecteur de raccordement, de préférence par une liaison par enfichage,
**caractérisé en ce que**
le premier connecteur de raccordement et le deuxième connecteur de raccordement sont constitués respectivement sous la forme d'un connecteur (10) de raccordement commun, dans lequel le connecteur (10) de raccordement commun est constitué, de manière à ce que, lorsque cesse la liaison du connecteur (10) de raccordement commun avec l'unité (2) d'entraînement, la liaison entre le système (6) de commande et l'unité (2) d'entraînement est coupée dans le temps avant la liaison entre le système (5) d'alimentation en électricité et l'unité (2) d'entraînement.

2. Système (1) d'entraînement suivant la revendication 1, dans lequel le premier connecteur de raccordement, le deuxième connecteur de raccordement ou le connecteur (10) de raccordement commun et l'unité (2) d'entraînement ont respectivement une borne (11, 12) complémentaire pour une alimentation en électricité de l'unité d'entraînement par un réseau à tension continue et supplémentairement respectivement une borne (13, 14) complémentaire pour un préchargement de l'onduleur (3) de l'unité (2) d'entraînement.

3. Système (1) d'entraînement suivant l'une des revendications précédentes, dans lequel le premier connecteur de raccordement et/ou le deuxième connecteur de raccordement ou le connecteur (10) de raccordement commun ont une liaison pouvant être défaite avec le système (5) d'alimentation en électricité et/ou avec le système (6) de commande.

4. Système (1) d'entraînement suivant l'une des revendications précédentes, dans lequel la liaison pouvant être défaite est une liaison par enfichage.

5. Système (1) d'entraînement suivant l'une des revendications précédentes, dans lequel il faut effectuer suivant une séquence déterminée à l'avance plusieurs stades de manipulation, afin de pouvoir défaire la liaison qui peut être défaite ou les liaisons qui peuvent être défaites.

6. Système (1) d'entraînement suivant la revendication 5, dans lequel l'onduleur (3) et/ou le premier connecteur de raccordement et/ou le deuxième connecteur de raccordement et/ou le connecteur (10) de raccordement commun ont des verrouillages reposant sur des leviers et/ou des contacts en avance et/ou des verrouillages magnétiques, de manière à ce qu'il faut effectuer les plusieurs stades de manipulation dans la séquence déterminée à l'avance, afin de pouvoir défaire la liaison qui peut être défaite ou les liaisons qui peuvent être défaites.

7. Système (1) d'entraînement suivant l'une des revendications précédentes, dans lequel l'unité (2) d'entraînement et/ou le premier connecteur de raccordement et/ou le deuxième connecteur de raccordement et/ou le connecteur (10) de raccordement commun ont un élément (17) optique, en particulier une diode électroluminescente, par lequel une fin d'une opération de précharge de l'onduleur (3) ou que l'on a atteint un état défini de l'unité (2) d'entraînement peut être signalée.

8. Système (1) d'entraînement suivant l'une des revendications précédentes, dans lequel le premier connecteur de raccordement et/ou le deuxième connecteur de raccordement ou le connecteur (10) de raccordement commun ont un élément de filtrage, en particulier un condensateur et/ou un blindage pour augmenter la compatibilité électromagnétique.

9. Connecteur (10) de raccordement pour un système d'entraînement suivant l'une des revendications précédentes, dans lequel le connecteur (10) de raccordement est constitué, de manière à, lorsque la liaison du connecteur (10) de raccordement commun à l'unité (2) d'entraînement est défaite, séparer la liaison entre le système (6) de commande et l'unité (2) d'entraînement à temps avant la liaison entre le système (5) d'alimentation en électricité et l'unité (2) d'entraînement.

10. Connecteur (10) de raccordement suivant la revendication 9, qui a une liaison pouvant être défaite avec le système (5) d'alimentation en électricité et/ou le système (6) de commande.

11. Connecteur (10) de raccordement suivant l'une des revendications 9 ou 10, qui a une borne (11) complémentaire à l'unité (2) d'entraînement pour une alimentation en électricité de l'unité (2) d'entraînement par un réseau à tension continue et en plus une borne (14) complémentaire pour un préchargement de l'onduleur (3) de l'unité (2) d'entraînement.

12. Procédé de production et de coupure d'une liaison d'une unité (2) d'entraînement, qui comprend un onduleur (3), et de préférence un moteur (4), comprenant un système (5) d'alimentation en électricité, qui est constitué pour alimenter l'unité (2) d'entraînement en une énergie électrique, et comprenant un système (6) de commande, qui comprend un ordinateur (8) de commande et au moins une ligne (9) de commande, dans lequel le système (6) de commande est constitué pour transmettre des instructions de commande à l'unité (2) d'entraînement, le procédé comprenant :
a) production d'une liaison de l'unité (2) d'entraînement avec le système (5) d'alimentation en électricité et avec le système (6) de commande par un connecteur (10) de raccordement commun ;
b) signalisation à l'unité (2) d'entraînement qu'une séparation par rapport au système (5) d'alimentation en électricité est imminente, dans lequel la signalisation s'effectue de préférence par une coupure de la liaison de l'unité (2) d'entraînement avec le système (6) de commande ;
c) ensuite coupure de la liaison de l'unité (2) d'entraînement avec le système (5) d'alimentation en électricité par une coupure de la liaison de l'unité (2) d'entraînement avec le connecteur (10) de raccordement.

13. Procédé suivant la revendication 12, dans lequel, lors du stade a du procédé suivant la revendication 12, on établit d'abord une liaison du système (5) d'alimentation en électricité avec une borne (14) de préchargement de l'unité (2) d'entraînement par l'intermédiaire du connecteur (10) de raccordement.
